Europäisches Patentamt

European Patent Office

Office européen des brevets

(11) Publication number: **0 318 741 B1**

# EUROPEAN PATENT SPECIFICATION

(45) Date of publication of patent specification: **15.04.92**   (51) Int. Cl.⁵: **G01G 19/00**, G01G 19/413

(21) Application number: **88118759.5**

(22) Date of filing: **10.11.88**

(54) **Division weigher.**

(30) Priority: **04.12.87 JP 185810/87 U**

(43) Date of publication of application:
**07.06.89 Bulletin 89/23**

(45) Publication of the grant of the patent:
**15.04.92 Bulletin 92/16**

(84) Designated Contracting States:
**CH DE FR LI**

(56) References cited:
**AT-B- 378 263
FR-A- 2 408 124
GB-A- 2 170 014
US-A- 3 090 452**

(73) Proprietor: **YAMATO SCALE COMPANY, LIMITED
5-22, Saenba-cho
Akashi-shi Hyogo-ken(JP)**

(72) Inventor: **Kawanishi, Shozo
4-12-5, Shinoharakitamachi
Nada-ku Kobe(JP)**
Inventor: **Masuda, Yasutoshi
3780-56, Aza Higashishiyama-nishiyama
Okuradani Akashi-shi Hyogo-ken(JP)**

(74) Representative: **von Bezold, Dieter, Dr. et al
Dr. Dieter von Bezold Dipl.-Ing. Peter Schütz
Dipl.-Ing. Wolfgang Heusler Brienner Strasse
52
W-8000 München 2(DE)**

## Description

This invention relates to a division weigher and, more particularly, to an electronic weigher for weighing a block of product and displaying a rate of division which is conveniently usable for cutting a piece of product having a desired weight from the weighed block.

It has been a conventional practice, in case of cutting from a rectangular, circular or cylindrical block of food such as cheese, ham or the like a piece of desired weight or price in accordance with a customer's order, to weigh the block by an electronic price counting weigher for obtaining its weight and/or price and to estimate the rate of division of the cut piece with respect to the weighed block therefrom. As the estimation is effected in mental arithmetic, the cut piece is generally incorrect in weight and, if an excessive unwanted quantity is removed therefrom by an additional cut, it leaves a slice or chip which is less commercial worth and may result in a trading loss.

Accordingly, an object of this invention is to provide an improved electronic weigher which can calculate and display the above-mentioned rate of division, thereby enabling correct and advantageous cutting.

According to this invention, provided is an electronic weigher comprising a weighing unit for weighing a block of product, an input unit for inputting desired weight of a piece of product to be cut from the weighed block, an arithmetic unit for calculating a rate of division by dividing the desired weight by the weight of the weighed block, and a display unit for displaying the resultant rate of division.

The weigher may be constructed so that desired price of the cut piece can be input instead of the weight of cut piece in accordance with a customer's request. In this case, the arithmetic unit may be arranged to calculate first the total price of the weighed block from its weight and its unit weight input previously and then calculate the rate of division from the desired weight and the calculated total weight.

While the rate of division may be displayed in the form of decimal number or percentage, it may be more convenient to display it in the form of fraction having 4, 8 or 16 as its denominator since it is mentally or sensuously easy to divide a block based upon a power of two.

These and other objects and features of this invetion will be described in more detail below with reference to the accompanying drawings.

In the drawings:

Figure 1 is a block diagram representing an embodiment of this invention;

Figure 2 is a flow chart illustrating an operation of the embodiment of Figure 1;

Figure 3 is a block diagram representing another embodiment of this invention;

Figure 4 is a flow chart illustrating an operation of the embodiment of Figure 3;

Figure 5 is a block diagram representing a further embodiment of this invention; and

Figures 6A and 6B form in combination a flow chart illustrating an operation of the embodiment of Figure 5.

Throughout the drawings, the same reference numerals are given to corresponding structural components and operational steps.

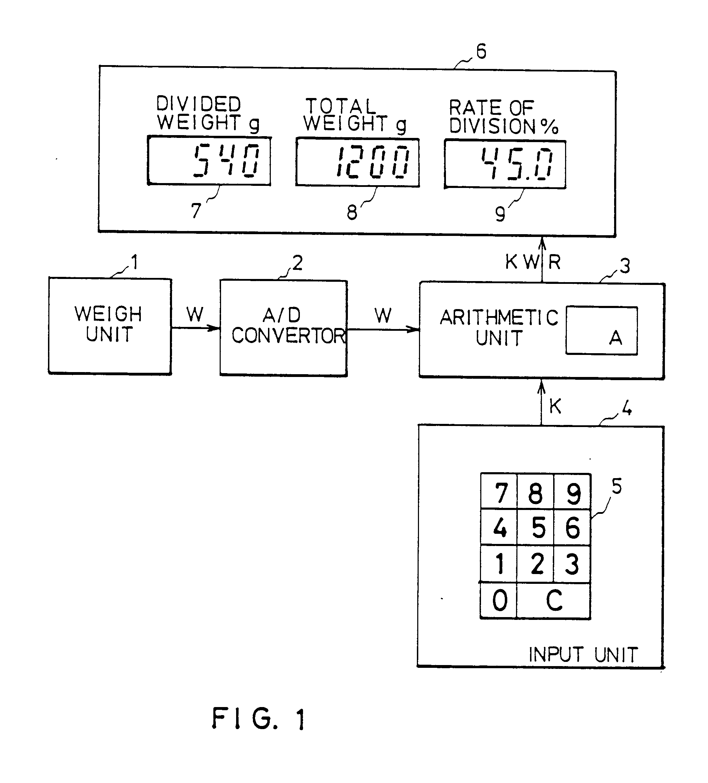

Referring to Figure 1, a weigh unit 1 weighs a block of product, such as cheese or ham, which is to be cut for sale and produces a weight signal W indicative of "total weight" (e.g., 1200 grams) of the block in analog form. The weight signal W is converted into digital form by an analog-to-digital (A/D) convertor 2 and supplied to an arithmetic unit 3. An input unit 4 has a numeral keyboard 5 including a clear key C and desired weight (e.g., 540 grams) of a piece of product to be cut from the weighed block, which is hereinunder referred to as "divided weight", is input from the keyboard 5 and also supplied to the arithmetic unit 3 as a digital weight signal K. The arithmetic unit 3 executes a calculation $R = (K/W) \times 100$ (i.e., $100 \times 540/1200 = 45.0$) and supplies the resultant rate of division R in percent (%) to a display unit 6 together with the divided weight K and the total weight W. These values are respectively displayed in display windows 7, 8 and 9 of the display unit 6 as shown. Thus, the desired piece can be cut easily from the weighed block by eye measure with reference to the displayed value of the rate of division R.

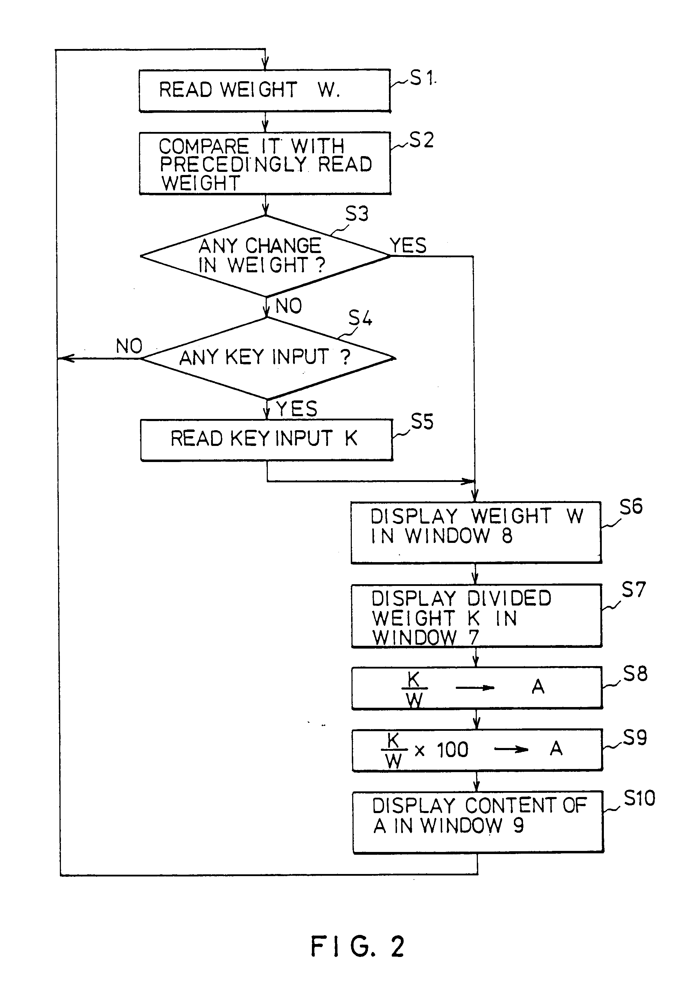

Referring next to the flow chart of Figure 2 illustrative of the above-mentioned operation executed mainly in the arithmetic unit 3, the weight signal W is read in the unit 3 in step S1 and compared with another weight signal which was read in the preceding cycle. If the comparison shows no change in weight in step S3, it is inquired whether any input K has been applied from the keyboard 5 or not in step S4. If not, the process returns to step S1, while the key input K is read in step S5 and step S6 follows. If any change is detected in step S3, the step S6 follows directly.

In step S6, the weight value W is displayed by the display unit 6 in its display window 8 and, in step S7, the divided weight K is displayed in the display window 7. In the next step S8, the value K is divided by the value W and the resultant value is stored in a register A included in the arithmetic unit 3 as shown in Figure 1 and, in the succeeding step S9, the content of the register A is multiplied by one hundred (100) and the result is returned to the register A. This new content of register A is displayed in the display window 9 in step S10 and the process returns to the initial step S1.

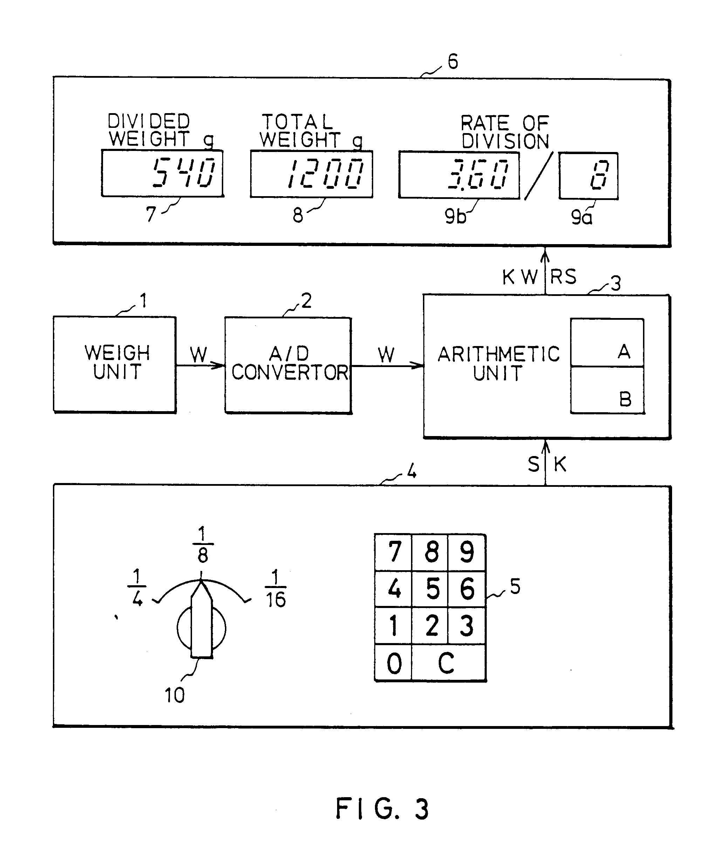

The embodiment of Figure 3 is adapted to display the rate of division R in the form of fraction having 4, 8 or 16 as its denominator as suggested already in the preface. As shown, this embodiment is similar in configuraticn to the embodiment of Figure 1 except that the arithmetic unit 3 includes two registers A and B, that the input unit 4 further includes a change-over switch 10 for selectively specifying the denominator of the rate of division R from 4, 8 and 16 and that the window 9 for displaying the rate of division R is divided into two windows 9a and 9b for respectively displaying the denominator and numerator of the franctional rate of division.

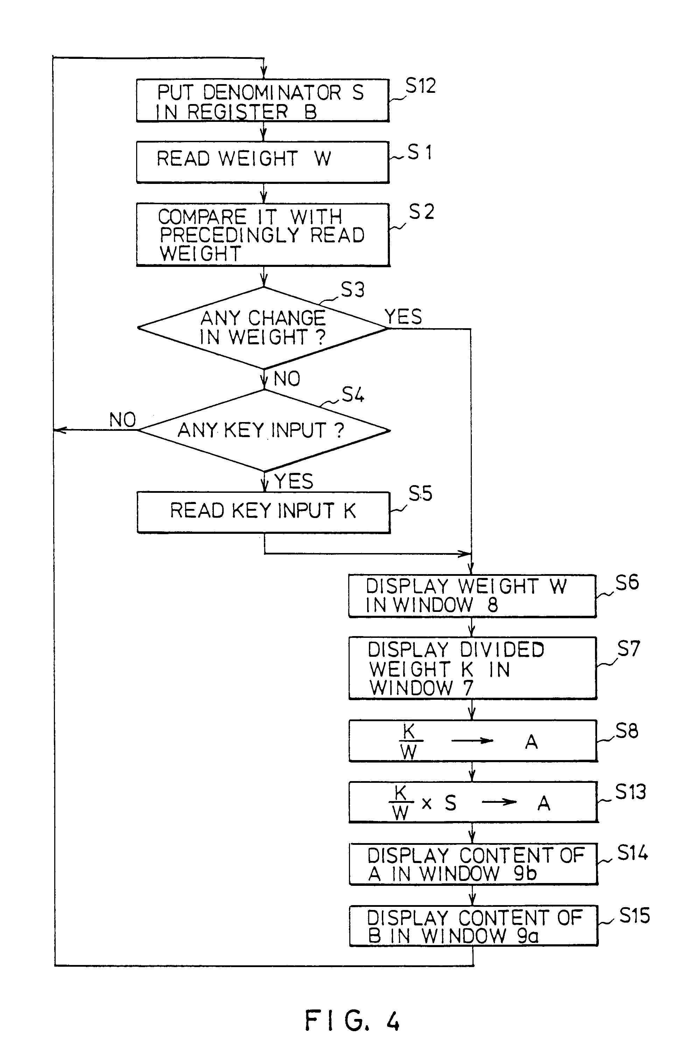

The operation of this embodiment is illustrated by the flow chart of Figure 4. In this case, the denominator of the rate of division is first specified by the switch 10 and the specified denominator S is stored in the register B in the first step S12. While the succeeding steps S1, S2, ... S8 are executed similarly to the operation as described with reference to Figure 2 so that the divided weight K and the total weight W are respectively displayed in the windows 7 and 8 and the rate of division K/W is stored in register A, the content of register A is multiplied by the specified denominator S and the resultant numerator is returned to register A in step S13. This new content of register A is displayed in the window 9b in step S14 and the content of register B or the denominator S is displayed in the window 9a in step S15. Then, the process returnes to the first step S12.

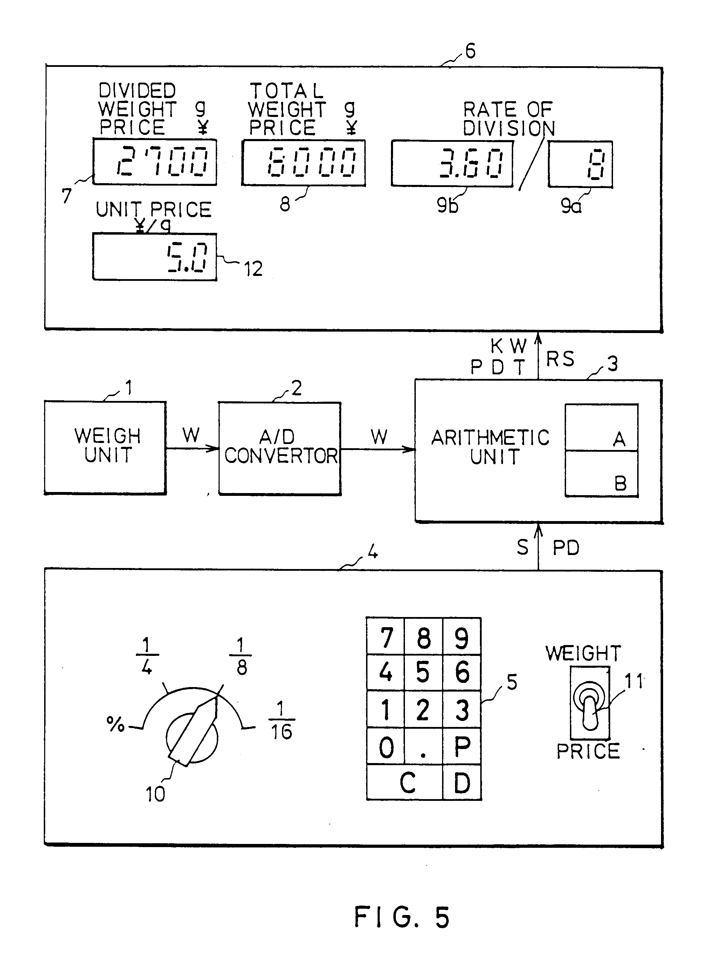

While the above-mentioned embodiments are adapted to specify the weight of the cut piece of product, that is, the divided weight by the keyboard 5, the embodiment of Figure 5 is adapted so that the price of the cut piece, which is hereinunder referred to as "divided price", can be specified also. For this purpose, a weight/price change-over switch 11 is added to the input unit 4 and a unit price input key P and a divided price input key D are added to the keyboard 5. Moreover, it is adapted to enable display of the rate of division not only in fraction but also in percent. For this purpose, the denominator selection switch 10 is modified to have a % position as shown. In order to display the unit price input from the keyboard 5, the display unit 6 is provided with an additional window 12 for unit price.

The operation of this embodiment is similar to that of the embodiment of Figure 1 or 3 when the switch 11 specifies weight and the switch 10 specifies percent or fraction. When percent is specified, "100" is displayed in the denominator window 9a.

In case of specifying the quantity of the cut piece in price, the switch 11 is turned to "price" side and the mode of display of the rate of division is selected by the switch 10. Then, the unit price of the product is input by the keyboard 5 and the unit price input key P is pushed. This results in display of the unit price in the window 12. When the weigh unit 1 is loaded with the product, its total price is calculated by the arithmetic unit 3 from its weight and unit price and displayed in the window 8. Then, the desired divided price is input by the keyboard 5 and the divided price input key D is pushed. This results in display of the divided price in the window 7 and the rate of division in the windows 9a and 9b.

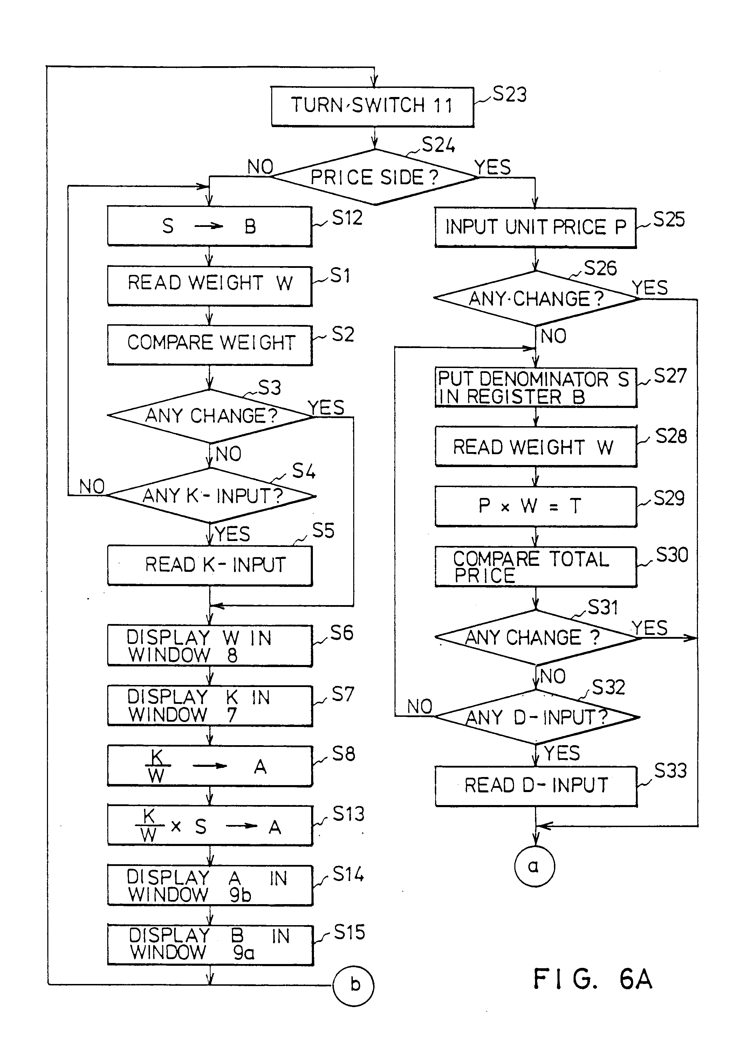

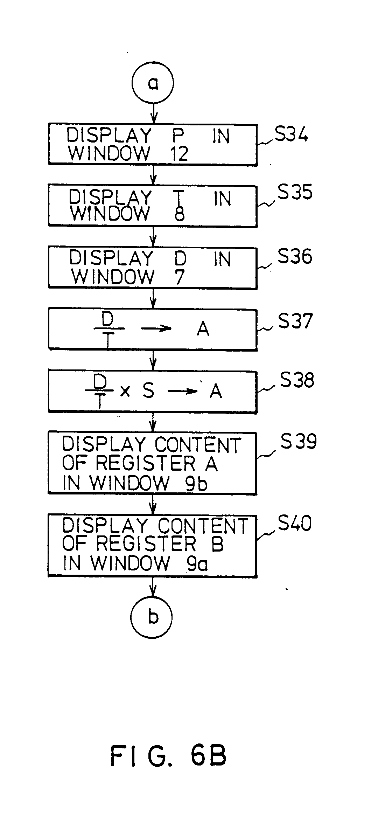

An exemplary program of the above-mentioned operation is shown in the flow chart of Figures 6A and 6B. When the switch 11 is turned in step S23, it is inquired in step S24 whether it is turned to "price" side or not. If the answer is NO, steps S12, S1-S8 and S13-S15 are executed in the same manner as in the aforementioned process of Figure 4 and the display appearance is obtained except that, when the percent display mode is selected, the denominator S is automatically specified as "100" in step S13 and "100" is displayed in the donominator window 9a.

If the answer in step S24 is YES, step S25 follows. When the unit price is input and the key P is pushed as described above in step S25, it is compared with the preceding unit price in step S26. If there is no change in the unit price, the specified denominator S is read in register B in step S27 and the total weight W is read in step S28. Then, the unit price P is multiplied by the total weight W in step S29 and the resultant total price T is compared with the preceding total price in step S30. If no change is detected in step S31, it in inquired in step S32 whether any divided price is input or not. If YES, the input divided price D is read in step S33, while the process returns to step S27 if no divided price is input. Then, unit price P, total price T and divided price D are displayed respectively in the windows 12, 8 and 7 in steps S34, S35 and S36. The divided price D is divided by the total weight T and the resultant rate of division is stored in register A in step S37. This rate of division is multiplied by S and the resultant numerator of the fractional rate of division is returned into register A in step S38. Then, the contents of registers A and B are displayed respectively in the windows 9b and 9a in steps S39 and S40. In the case of price display also, "100" is substituted for the denominator S.

If there is any change in step S26 or S31, step S34 follows directly and the process returns to step S23 from step S40.

As described above, if a block of product is put on a weighing cradle and desired "divided weight or price" is input from the keyboard, a corresponding rate of division is displayed automatically. Thus, a piece of product having the desired weight or price can be cut easily from the block by eye measure with reference to the displayed rate of division.

It should be noted that the above-described embodiments are given only for the purpose of illustration and various modifications and changes can be made within the scope of this invention as defined by the appended claims

## Claims

1. An electronic weigher comprising a weighing unit for measuring weight of a block of product, part of which is to be divided therefrom, an input unit for applying desired weight of said part, an arithmetic unit for dividing said desired weight by said measured weight to provide a rate of division, and a display unit for displaying said calculated rate of division.

2. An electronic weigher, as set forth in Claim 1, characterized in that said input unit includes means for applying unit price of said product and means for applying desired price of said part, and said arithmetic unit includes means for multiplying said unit price by said measured weight to provide total price of said block and means for dividing said desired price by said total price to provide said rate of division.

3. An electronic weigher, as set forth in Claim 1, characterized in that said input unit includes means for applying an integer, said arithmetic unit includes means for multiplying said calculated rate of division by said integer to provide a product value, and said display unit includes means for displaying said rate of division as a fraction having said integer as its denominator and said product value as its numerator.

4. An electronic weigher, as set forth in Claim 3, characterized in that said integer applying means is adapted to select said integer from a group including powers of two.

## Revendications

1. Dispositif de pesage électronique comprenant une unité de pesage pour mesurer le poids d'un bloc d'un produit dont un morceau doit être séparé, une unité d'entrée pour introduire un poids désiré de ce morceau, une unité arithmétique pour diviser le poids désiré par le poids mesuré, afin de fournir un taux de division, et une unité d'affichage pour indiquer le taux de division calculé.

2. Dispositif de pesage électronique suivant la revendication 1 caractérisé en ce que l'unité d'entrée comporte des moyens pour introduire un prix du poids unitaire du produit et des moyens pour introduire un prix désiré du morceau, et l'unité arithmétique comporte des moyens pour multiplier le prix du poids unitaire par le poids mesuré, afin de donner le prix total du bloc de produit, et des moyens pour diviser le prix désiré par le prix total, afin de fournir le taux de division.

3. Dispositif de pesage électronique suivant la revendication 1 caractérisé en ce que l'unité d'entrée comporte des moyens pour introduire un nombre entier, l'unité arithmétique comporte des moyens pour multiplier le taux de division calculé par ce nombre entier, afin de fournir une valeur du produit de la multiplication, et l'unité d'affichage comporte des moyens pour afficher le taux de division sous la forme d'une fraction dont le nombre entier constitue le dénominateur et la valeur du produit de la multiplication le numérateur.

4. Dispositif de pesage électronique suivant la revendication 3 caractérisé en ce que les moyens introduisant le nombre entier sont adaptés de manière à sélectionner le nombre entier à partir d'un groupe comprenant des puissances de deux.

## Patentansprüche

1. Elektronische Wiegeeinrichtung mit einer Wiegeeinheit zur Ermittlung des Gewichts eines Blockes eines Produkts, von dem ein Teil abgetrennt werden soll, einer Eingangseinheit zum Eingeben eines Sollgewichtes des Teiles, einer Recheneinheit zum Dividieren des Sollgewichtes durch das ermittelte Gewicht, um ein Teilungsverhältnis zu erhalten, und eine Anzeigeeinheit zum Anzeigen des errechneten Teilungsverhältnisses.

2. Elektronische Wiegeeinrichtung nach Anspruch 1, **dadurch gekennzeichnet,** daß die Eingangseinheit eine Vorrichtung zum Eingeben eines Preises für eine Einheit des Produktes sowie eine Vorrichtung zum Eingeben des gewünschten Preises des Teiles enthält und daß die Recheneinheit eine Anordnung zum Multiplizieren des Einheitspreises mit dem ermittelten Gewicht unter Erzeugung eines Gesamtpreises des Blockes und eine Anordnung zum Dividieren des gewünschten Preises durch den Gesamtpreis zur Ermittlung des Teilungsverhältnisses enthält.

3. Elektronische Wiegeeinrichtung nach Anspruch 1, **dadurch gekennzeichnet,** daß die Eingangseinheit eine Anordnung zum Eingeben einer ganzen Zahl enthält, daß die Recheneinheit eine Anordnung zum Multiplizieren des errechneten Teilungsverhältnisses mit der ganzen Zahl enthält, um einen Produktwert zu erzeugen und daß die Anzeigeeinheit eine Anordnung zum Anzeigen des Teilungsverhältnisses als Bruch mit der ganzen Zahl als Nenner und dem Produktwert als Zähler enthält.

4. Elektronische Wiegeeinrichtung nach Anspruch 3, **dadurch gekennzeichnet,** daß die Anordnung zum Eingeben der ganzen Zahl für die Auswahl der ganzen Zahl aus einer Gruppe von Potenzen von Zwei ausgebildet ist.

DIVIDED WEIGHT g

TOTAL WEIGHT g

RATE OF DIVISION %

*540*

*1200*

*45.0*

7

8

9

6

WEIGH UNIT

1

W

A/D CONVERTOR

2

W

ARITHMETIC UNIT

A

3

K W R

K

INPUT UNIT

| 7 | 8 | 9 |
| 4 | 5 | 6 |
| 1 | 2 | 3 |
| 0 | C | |

4

5

FIG. 1

FIG. 2

**DIVIDED WEIGHT g** `540` — 7

**TOTAL WEIGHT g** `1200` — 8

**RATE OF DIVISION** `3.60` — 9b / `8` — 9a

6

WEIGH UNIT — 1

A/D CONVERTOR — 2

ARITHMETIC UNIT — 3 | A | B

W → W → K W RS

S K

4

1/8 1/4 1/16 — 10

| 7 | 8 | 9 |
| 4 | 5 | 6 |
| 1 | 2 | 3 |
| 0 | C | |

5

# FIG. 3

```
┌─────────────────────────┐
│ PUT DENOMINATOR S       │─S12
│ IN REGISTER B           │
└─────────────────────────┘
            │
┌─────────────────────────┐
│ READ WEIGHT W           │─S1
└─────────────────────────┘
            │
┌─────────────────────────┐
│ COMPARE IT WITH         │─S2
│ PRECEDINGLY READ        │
│ WEIGHT                  │
└─────────────────────────┘
            │
           S3
        ╱ANY CHANGE╲    YES
        ╲IN WEIGHT?╱ ──────────┐
            │NO                 │
           S4                   │
   NO   ╱ANY KEY INPUT?╲        │
 ◄──────╲              ╱        │
            │YES                │
┌─────────────────────────┐    │
│ READ KEY INPUT K        │─S5 │
└─────────────────────────┘    │
            │                   │
            └───────────────────┤
                                │
            ┌─────────────────────────┐
            │ DISPLAY WEIGHT W        │─S6
            │ IN WINDOW 8             │
            └─────────────────────────┘
                        │
            ┌─────────────────────────┐
            │ DISPLAY DIVIDED         │─S7
            │ WEIGHT K IN             │
            │ WINDOW 7                │
            └─────────────────────────┘
                        │
            ┌─────────────────────────┐
            │  K                      │─S8
            │  ─  ──────►  A          │
            │  W                      │
            └─────────────────────────┘
                        │
            ┌─────────────────────────┐
            │  K                      │─S13
            │  ─ × S  ──────►  A      │
            │  W                      │
            └─────────────────────────┘
                        │
            ┌─────────────────────────┐
            │ DISPLAY CONTENT OF      │─S14
            │ A IN WINDOW 9b          │
            └─────────────────────────┘
                        │
            ┌─────────────────────────┐
            │ DISPLAY CONTENT OF      │─S15
            │ B IN WINDOW 9a          │
            └─────────────────────────┘
```

$$\frac{K}{W} \longrightarrow A$$

$$\frac{K}{W} \times S \longrightarrow A$$

FIG. 4

FIG. 5

TURN·SWITCH 11 —S23

S24
PRICE SIDE ?
NO / YES

**NO side:**

S → B —S12

READ WEIGHT W —S1

COMPARE WEIGHT —S2

ANY CHANGE? —S3
YES / NO

ANY K-INPUT? —S4
NO / YES

READ K-INPUT —S5

DISPLAY W IN WINDOW 8 —S6

DISPLAY K IN WINDOW 7 —S7

$\dfrac{K}{W} \rightarrow A$ —S8

$\dfrac{K}{W} \times S \rightarrow A$ —S13

DISPLAY A IN WINDOW 9b —S14

DISPLAY B IN WINDOW 9a —S15

(b)

**YES side:**

INPUT UNIT PRICE P —S25

ANY·CHANGE ? —S26
YES / NO

PUT DENOMINATOR S IN REGISTER B —S27

READ WEIGHT W —S28

$P \times W = T$ —S29

COMPARE TOTAL PRICE —S30

ANY CHANGE ? —S31
YES / NO

ANY D-INPUT? —S32
NO / YES

READ D-INPUT —S33

(a)

FIG. 6A

```
            ( a )
              │
              ▼
  ┌────────────────────┐
  │ DISPLAY  P   IN    │── S34
  │ WINDOW  12         │
  └────────────────────┘
              │
              ▼
  ┌────────────────────┐
  │ DISPLAY  T   IN    │── S35
  │ WINDOW  8          │
  └────────────────────┘
              │
              ▼
  ┌────────────────────┐
  │ DISPLAY  D   IN    │── S36
  │ WINDOW  7          │
  └────────────────────┘
              │
              ▼
  ┌────────────────────┐
  │    D              │── S37
  │    ─  ─→   A       │
  │    T              │
  └────────────────────┘
              │
              ▼
  ┌────────────────────┐
  │    D              │── S38
  │    ─ × S ─→  A     │
  │    T              │
  └────────────────────┘
              │
              ▼
  ┌────────────────────┐
  │ DISPLAY CONTENT    │── S39
  │ OF REGISTER A      │
  │ IN WINDOW  9b      │
  └────────────────────┘
              │
              ▼
  ┌────────────────────┐
  │ DISPLAY CONTENT    │── S40
  │ OF REGISTER  B     │
  │ IN WINDOW  9a      │
  └────────────────────┘
              │
              ▼
            ( b )
```

# FIG. 6B